# EUROPEAN PATENT SPECIFICATION

(11) **EP 2 239 483 B1**
(45) Date of publication and mention of the grant of the patent: **19.09.2012**
(21) Application number: 10159459.6
(22) Date of filing: 09.04.2010
(51) Int. Cl.: F16H 7/08, F16H 7/18

(54) **Shoe tensioner for an oil wet belt drive**
Schuhspanner für einen Riemenantrieb zur Verwendung mit Öl
Tendeur de sabot pour un entrainement par courroie à utiliser avec de l'huile

(30) Priority: 09.04.2009 IT TO20090281
(43) Date of publication of application: 13.10.2010
(73) Proprietor: Dayco Europe S.R.L., Chieti (IT)
(72) Inventor: Pennazza, Mario, 65123, PESCARA (IT); Rolando, Adriano, 10087, VALPERGA CANAVESE (IT); Savino, Michele, 10042, NICHELINO (IT)
(74) Representative: Jorio, Paolo

(56) References cited:
- EP-A- 0 785 375
- WO-A-2007/013111
- US-A- 3 358 522

## Description

The present invention relates to a tensioner for an oil wet belt drive.

A shoe loaded by a spring may be used to tension the belt in a belt drive in which oil wets the belt in all operating conditions, for example because means spraying an oil flow rate on the belt are provided.

The shoe has a curved surface which comes into contact with the belt and may have a profile having a determined variable curvature to distribute the contact pressure and promote the formation of an oil clearance between the belt and the curved surface. However, during some particular operating conditions such as acceleration transients and/or load peaks, it may be useful to add a feeding device to direct a lubricating oil flow rate at the contact area between the belt and the shoe.

US-A-3358522 discloses a tensioner according to the preamble of claim 1. Such tensioner does not provide centering for the oil duct.

It is the object of the present invention to provide a shoe tensioner which is compact, simple to manufacture and reliable and which comprises an oil feeding device.

The object of the present invention is achieved by means of a tensioner according to claim 1.

For a better understanding of the present invention, it will further be disclosed with reference to the accompanying figures, in particular:
figure 1 is a perspective view of a tensioner according to the present invention;
Figure 2 is a section along plane II-II of figure 1;

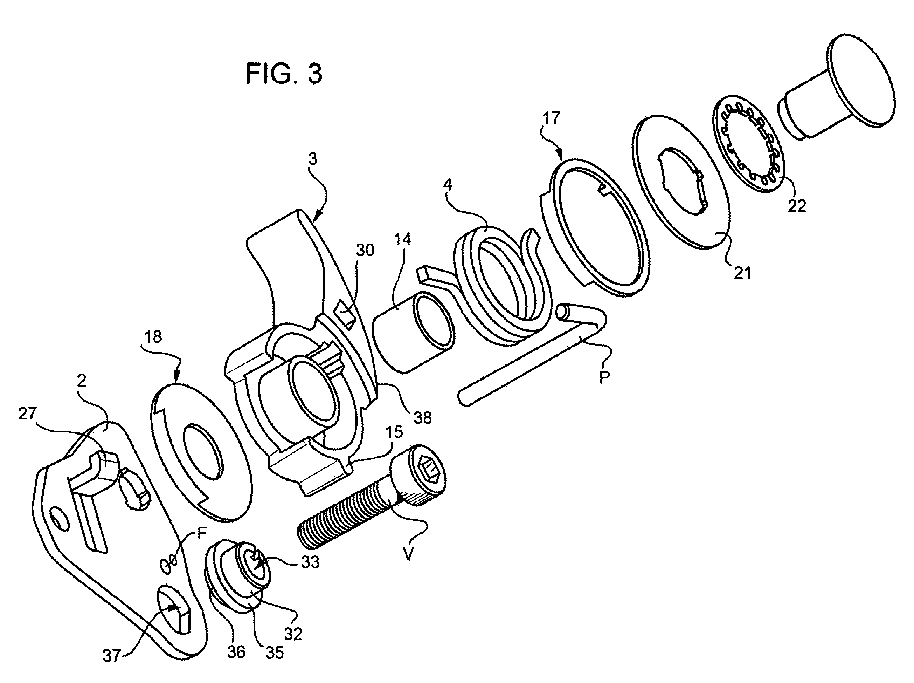

figure 3 is an exploded view of the tensioner of figure 1; and

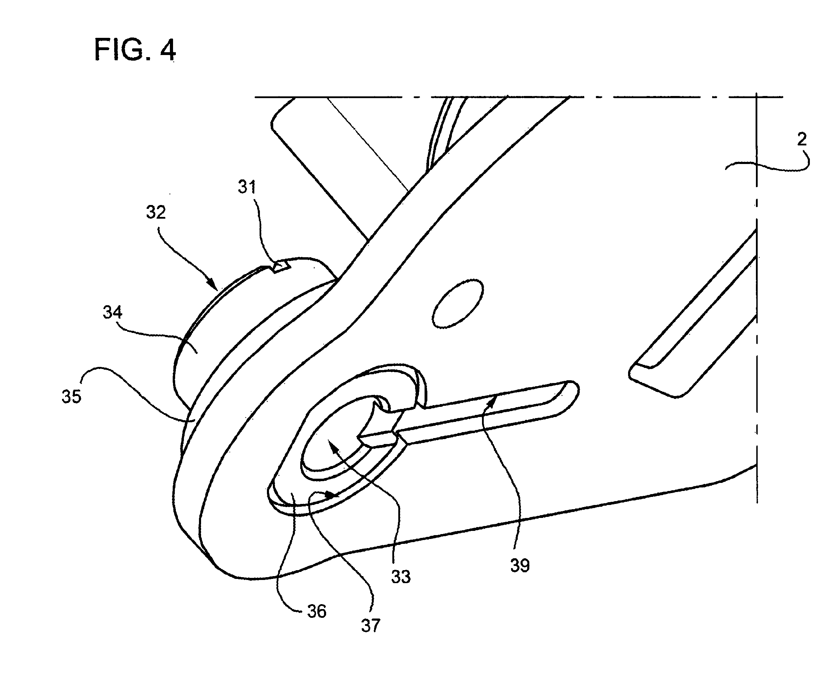

figure 4 is a perspective view of a detail of the tensioner in figure 1.

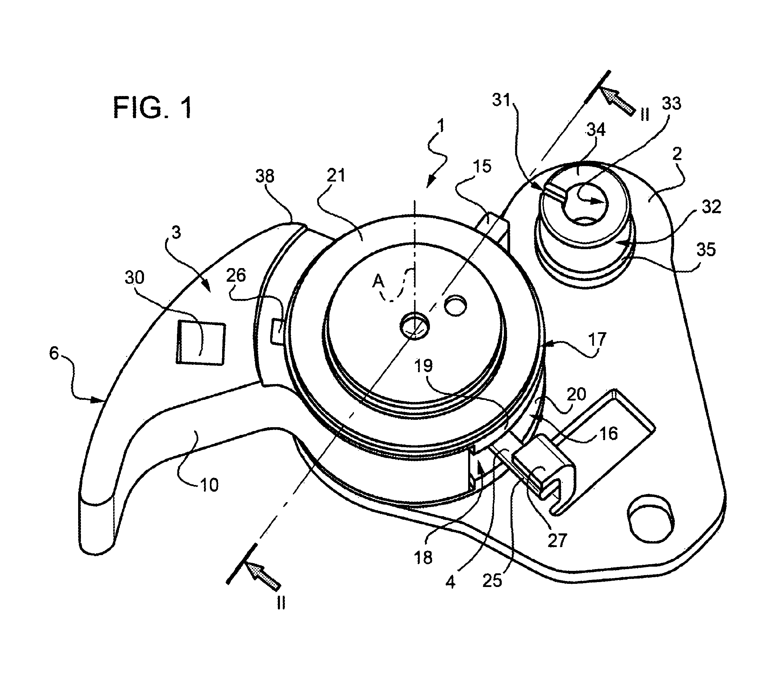

In figure 1 numeral 1 indicates, as a whole, a tensioner comprising a base plate 2, a shoe 3 hinged about an axis A, a helical spring 4 acting on shoe 3 and a friction device to dampen the oscillations of shoe 3.

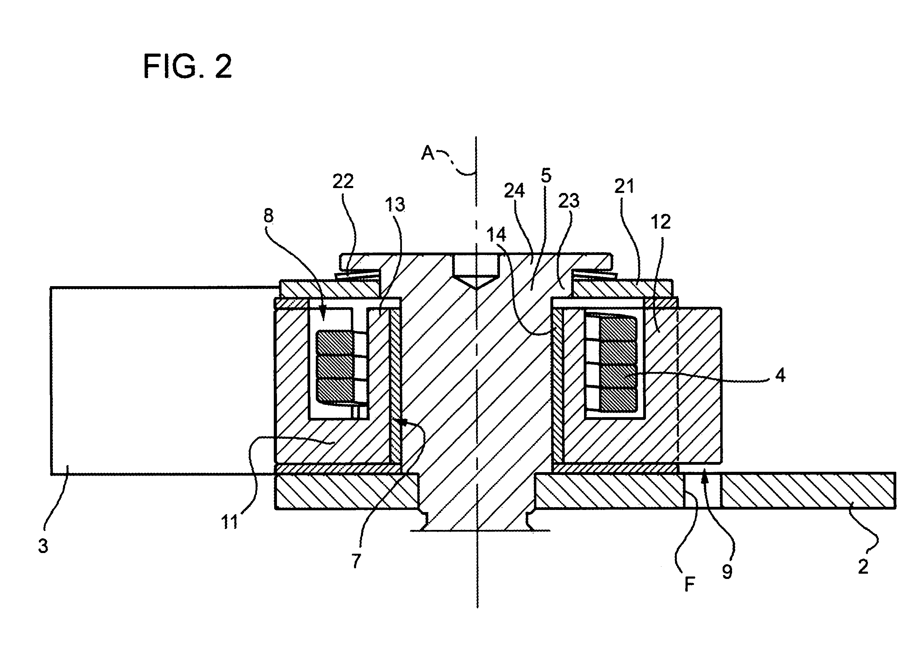

In particular (figure 2), shoe 3 is hinged to a pin 5 fixed to base plate 2 and defining axis A and defines, in a single body, a curved surface 6 arranged in use in contact on a back of an oil wet belt of a belt drive, a hole 7 to house pin 5 with a bushing interposed as will be specified in greater detail hereinafter, and an annular cavity 8 surrounding hole 7 and housing the turns of spring 4. Shoe 3 preferably comprises a cup-shaped body 9 defining hole 7 and annular cavity 8 and an arm 10 projecting from the side of cup-shaped body 9 and defining curved surface 6. Advantageously, the curvature of curved surface 6 is designed as disclosed in patent application W02008117319 filed in the name of the same applicant.

Cup-shaped body 9 comprises a base wall 11 facing base plate 2, a cylindrical side wall 12 projecting from the periphery of base wall 11 and a tubular wall 13 concentrical to cylindrical side wall 12 and defining a radial guide for the rotation of shoe 3, a bushing 14 being interposed between tubular wall 13 and pin 5, the bushing being made of a polymeric material having a friction coefficient in oil substantially equivalent to that normally used for dry tensioners.

Cup-shaped body 9, which projects radially on the opposite side of cavity 8 with respect to cylindrical side wall 12, comprises a projection 15 adapted to cooperate with a disassemblable safety pin (P) securable in a hole F to base plate 2. When projection 15 abuts against the safety pin upon loading of spring 4, shoe 3 defines a predetermined angular position with respect to base plate 2. In particular, with reference to a drive comprising at least two pulleys and a belt wound about the two pulleys, the predetermined angular position is that allowing an operator to manually mount the belt on the pulleys when tensioner 1 has already been fixed in a previous mounting step. When the safety pin is extracted by the operator, spring 4 actuates shoe 3 against a back of the belt and the drive is ready to work upon the operation of appropriate means for feeding a flow rate of oil. In particular, the feeding point and the oil flow rate are such as to generate and maintain, during each operating condition, a clearance of oil between the back of the belt and curved surface 6 of shoe 3.

Furthermore, cup-shaped body 9 of shoe 3 defines a window 16 that connects cavity 8 with the external environment. In particular, as previously stated, the external environment in which tensioner 1 operates is a closed environment of the internal combustion engine. Within this environment a multitude of oil particles is suspended by the ventilating effect during the operation of the drive. Therefore, in use, spring 4 and the inside of cavity 8 are lubricated by means of the oil particles which pass through window 16.

In addition, the friction device to dampen the oscillations of shoe 3 comprises a pair of discs 17, 18 which may be made of polymeric material, arranged on opposite sides with respect to cup-shaped body 9 and provided with respective pairs of axially symmetrical teeth 19, 20 and one of which, for each pair, housed in window 16. In particular, disc 17 is arranged between cup-shaped body 9 and a lid 21 rotationally fixed with respect to pin 5 and disc 18 is arranged between cup-shaped body 9 and base plate 2. In particular lid 21 and base wall 11 close cavity 8 respectively on the top and on the bottom in an axial direction and discs 17, 18 define respective friction surfaces.

Teeth 19, 20 are engaged in window 16 to make discs 17, 18 rotationally integral to shoe 3. Lid 21 closes annular cavity 8 on the opposite side with respect to base wall 11 and is also connected in an axially slideable manner to pin 5. As a matter of fact, tensioner 1 comprises a cup-shaped spring 22 which presses lid 21 and applies an axial load adapted to define the dampening torque that discs 17, 18 apply to shoe 3.

In particular, pin 5 comprises a profiled head having in a sequence from the element nearest to tubular wall 13, a portion 23 having a non-cylindrical (e.g. polygonal) section, and an end portion 24 having a transversal dimension greater than that of portion 23, e.g. disc-shaped. Thereby, end portion 24 defines a shoulder for Belleville spring 22 and portion 23 is connected to lid 21 and defines with the latter the rotationally fixed and axially sliding connection disclosed previously.

Furthermore, spring 4, having a round or rectangular or square cross-section, has a first end portion 25 fixed to base plate 2 and a second end portion 26 fixed with respect to shoe 3. Preferably, end portion 25 is fixed to a projection 27 obtained by bending a portion integral with base plate 2 and end portion 26 is housed in a seat defined by the body of shoe 3. Advantageously, end portion 25 projects from annular cavity 8 towards projection 27 by means of window 16, which must therefore have a tangential dimension at least such as to allow any angular design and/or use position of shoe 3.

The body of shoe 3 and preferably arm 10 also defines a seat 30 to introduce a manual tool and therefore control the angular position of shoe 3 during e.g. a maintenance operation of the belt drive.

Tensioner 1 further comprises a fluid line to direct oil at the contact area between the back of the belt and curved surface 6. This fluid line has a feeding port 31 arranged upstream of shoe 3 with respect to the feeding direction of the belt on curved surface 6. Preferably, the fluid line is defined at least partially by a pipe which is defined at least partially by a pipe that further defines a seat for a fastening screw V of base 2 on a wall of the engine. For example, tensioner 1 comprises a bushing 32 fixed rigidly to base plate 2 and defining a through-hole 33 having an axis perpendicular to base plate 2. Bushing 32 preferably comprises in a single body, a cylindrical portion 34, a ring 35 having a diameter greater than that of cylindrical portion 34 and a fastening portion 36 arranged on the opposite side of cylindrical body 34 with respect to ring 35. Cylindrical portion 34 defines at least one portion of feeding port 31 which is preferably obtained by means of a notch obtained on the edge of cylindrical portion 34. In particular, port 31 is defined, with respect to what is shown in figure 1, on the bottom and side by cylindrical portion 34. Port 31 is defined on top by the head of fastening screw V, the stem of which is housed by through-hole 33. Port 31 is thereby defined together by cylindrical portion 34 and by the head of the screw and is preferably oriented in a predetermined manner. For this purpose, fastening portion 36 has a non circular section that correspondingly couples with a seat 37 of base plate 2 and port 31 has a fixed angular position which is predetermined with respect to fastening portion 36 so that the oil feeding direction is fixed with respect to base plate 2 and directed e.g. towards the back of the belt or towards an initial segment 38 of curved surface 6. Furthermore, port 31 is preferably arranged at a height equivalent to about half of the width of the curved surface measured perpendicularly to base plate 2.

Base plate 2 may also have a channel 39 communicating with through-hole 33 and with a feeding port connected to the lubricating circuit of the internal combustion engine on which tensioner 1 is mounted. Channel 39 may be obtained by milling and is obtained in the thickness of base plate 2. Similarly also port 31 may be obtained by milling. In use the planarity of the seat on the wall of the engine and of the face of base plate 2 on which channel 39 is defined in combination with the tightening load of the screw are such as to define a seal for oil that flows at a pressure normally below 2 bars along channel 39, hole 33 and port 31. For example, the planarity is equal or below 0.1 mm.

The advantages of tensioner 1 according to the present invention are the following.

Port 1 is arranged upstream of shoe 3 to lubricate either curved surface 6 or the back of the belt or both depending on the extent of the spraying cone of the oil.

Furthermore, the fluid line partially uses channels already present on tensioner 1 so as to reduce the overall number of required pieces and reduce the dimensions. Channel 39 and port 31 may be obtained in a simple manner along an automated line so as to reduce production time and costs.

Furthermore, bushing 14 and discs 17, 18 are lubricated by means of window 16. Thereby, tensioner 1 takes advantage of the closed external environment within which, at least during use, there is an amount of nebulised oil and/or oil in other forms in an amount such as to maintain a clearance of oil between the back of the belt and curved surface 6.

Window 16 also serves as a housing seat for teeth 19, 20 and allows to therefore avoid dedicated mechanical processing which increase the cost of the tensioner.

Furthermore, window 16 allows to lock end portion 25 of spring 4 on base plate 2 outside cup-shaped body 9. Thereby, cup-shaped body 9 has compact radial and axial dimensions. In particular, end portion 25 directly projects by crossing cup-shaped body 9 without requiring additional thicknesses or the distancing of cup-shaped body 9 from base plate 2. Furthermore, projection 27 has an arm with respect to axis A such as to decrease the specific contact pressure with end portion 25 and allow to compactly dimension also projection 27.

Shoe 3 has a relatively complicated shape and is advantageously manufactured in relation to the manufacturing process by sintering metal powder in a single body comprising cup-shaped body 9, arm 10 and projection 15.

Therefore, tensioner 1 results substantially simple to manufacture and has compact dimensions especially advantageous in the design of oil wet belt drives, in particular because the latter may be mounted on engines with chain drives already designed for the typical dimensions of the shoes for chain drives, the chain shoes having especially reduced radial dimensions. In particular, a shoe for a chain drive has no springs and is either fixed or loaded by linear fluid actuators.

Furthermore, projection 15 and seat 30 allow to mount and perform maintenance operations in a simple and cost-effective manner.

More in general, tensioner 1 adjusts the tension on the belt of the belt drive and acts for this purpose on the loose strand. Furthermore, the use of the profile of curved surface 6 according to the previously cited international application allows to reduce to a minimum the energy dissipated by friction.

Sintering allows to control porosity of shoe 3 and to promote the adhesion of the oil and the presence of the clearance between curved surface 6 and the back of the belt.

It is finally apparent that tensioner 1 disclosed and shown herein may be modified or varied without departing from the scope of protection as specified in the appended claims.

For example, the body of shoe 3 may be made of polymeric material.

A sealing device may be provided, e.g. a sealing ring, surrounding seat 37 and channel 39.

## Claims

1. A tensioner for an oil wet belt drive, comprising a base (2) adapted to be fixed to a wall of an internal combustion engine, a shoe (3) hinged to said base (2) about an axis (A) and a fluid line (31, 33, 39) for feeding oil having a port (31) arranged upstream of said shoe (3) with respect to the feeding direction of the belt on said shoe (3)
**characterised in that** said line comprises a pipe (33) suitable for housing the stem of a device (V) for fastening said tensioner to the wall of said internal combustion engine.

2. The tensioner according to claim 1, **characterised in that** said pipe (33) is defined by a cylindrical body (34) and **in that** said port (31) is partially defined by said cylindrical body (34).

3. The tensioner according to claim 2, **characterised in that** said port (31) is also defined by means of a portion of said fastening device (F).

4. The tensioner according to any of the preceding claims, **characterised by** comprising an angular orientation device (36) for orienting said port (31) in a fixed angular position.

5. The tensioner according to any of the preceding claims, **characterised by** comprising a torsion spring (4) having a first end portion (26) connected to said shoe (3) and a second end portion (25) fixed with respect to said base (2) and housed in a cavity (8) surrounded by a fixed wall (12) with respect to said.shoe (3), wherein said wall (12) defines an opening (16) crossed by said second end portion (25).

6. The tensioner according to claim 5, **characterised in that** a friction surface is arranged between said wall (12) and said base (2), and **in that** said second end portion (25) is arranged on the opposite side of said base (2) with respect to said friction surface and is overlapped to said friction surface in the axial direction.

7. The tensioner according to claim 6, **characterised by** comprising at least one friction element (17; 18) having a tooth (19; 20) housed in said opening (16) to define a rotationally rigid connection with said shoe (3).

8. The tensioner according to claim 7, **characterised by** comprising a second friction element (18; 17) arranged on the opposite side of said at least one friction element (17; 18) with respect to said wall (12) and having a second tooth (20; 19) thereof housed in said opening (16) to define a rotationally rigid connection with said shoe (3).

9. The tensioner according to any of claims from 5 to 8, **characterised in that** said cavity (8) is annular and is closed at both the top and the bottom along the axial direction.

10. The tensioner according to any of claims from 5 to 9, **characterised in that** said base (2) comprises a connecting element (27) cooperating with said second end portion (25) and arranged outside said cavity (8).

11. The tensioner according to any of claims from 5 to 10, **characterised in that** said shoe (3) defines a cup-shaped body (9) housing the spring (4).

12. The tensioner according to any of the preceding claims, **characterised in that** said shoe (3) comprises an arm (10) defining a curved surface (6) adapted to come in contact with a belt of a belt drive, and **in that** said arm (10) defines a seat (30) for a manual tool.

## Patentansprüche

1. Spannvorrichtung für einen mit Öl benetzten Riemenantrieb, umfassend eine Basis (2), die ausgelegt ist, um an einer Wand von einer Verbrennungskraftmaschine fixiert zu werden, ein Schuh (3), der an der Basis (2) um eine Achse (A) drehbar angebracht ist, und eine Fluidleitung (31, 33, 39) zum Zuführen von Öl mit einem Anschluss (31), der stromaufwärts von dem Schuh (3) bezüglich der Zuführrichtung von dem Riemen an dem Schuh (3) angeordnet ist,
**dadurch gekennzeichnet, dass**
die Leitung ein Rohr (33) umfasst, das ausgelegt ist für ein Aufnehmen des Bolzens von einer Vorrichtung (V) zum Befestigen der Spannvorrichtung an der Wand der Verbrennungskraftmaschine.

2. Spannvorrichtung gemäß Anspruch 1, **dadurch gekennzeichnet, dass** das Rohr (33) über einen zylindrischen Körper (34) definiert ist und dadurch, dass der Anschluss (31) teilweise über den zylindrischen Körper (34) definiert ist.

3. Spannvorrichtung gemäß Anspruch 2, **dadurch gekennzeichnet, dass** der Anschluss (31) auch über einen Bereich von der Befestigungsvorrichtung (F) definiert ist.

4. Spannvorrichtung gemäß einem der vorstehenden Ansprüche, gekennzeichnet über ein Umfassen einer Winkelausrichtungsvorrichtung (36) zum Ausrichten des Anschlusses (31) in einer fixierten Winkelposition.

5. Spannvorrichtung gemäß einem der vorstehenden Ansprüche, gekennzeichnet über ein Umfassen einer Torsionsfeder (4) mit einem ersten Endbereich (26), der mit dem Schuh (3) verbunden ist, und einem zweiten Endbereich (25), der bezüglich der Basis (2) fixiert ist und in einer Kavität (8) aufgenommen ist, die von einer fixierten Wand (12) bezüglich des Schuhs (3) umgeben ist, wobei die Wand (12) eine Öffnung (16) definiert, die von dem zweiten Endbereich (25) durchbrochen wird.

6. Spannvorrichtung gemäß Anspruch 5, **dadurch gekennzeichnet, dass** eine Reibfläche zwischen der Wand (12) und der Basis (2) angeordnet ist, und dadurch, dass der zweite Endbereich (25) an der gegenüberliegenden Seite von der Basis (2) bezüglich der Reibfläche angeordnet ist und von der Reibfläche in der axialen Richtung überdeckt ist.

7. Spannvorrichtung gemäß Anspruch 6, gekennzeichnet über ein Umfassen von wenigstens einem Reibungselement (17; 18) mit einem Zinken (19; 20), der in der Öffnung (16) aufgenommen ist, um eine drehfeste Verbindung mit dem Schuh zu bilden.

8. Spannvorrichtung gemäß Anspruch 7, gekennzeichnet über ein Umfassen eines zweiten Reibelements (18; 17), das an der gegenüberliegenden Seite von dem wenigstens einem Reibelement (17; 18) bezüglich der Wand (12) angeordnet ist und einen zweiten Zinken (20; 19) davon umfasst, der in der Öffnung (16) aufgenommen ist, um eine drehfeste Verbindung mit dem Schuh (3) zu bilden.

9. Spannvorrichtung gemäß einem der Ansprüche 5 bis 8, **dadurch gekennzeichnet, dass** die Kavität (8) ringförmig ausgebildet ist und an beiden der Oberseite und dem Boden entlang der axialen Richtung geschlossen ist.

10. Spannvorrichtung gemäß einem der Ansprüche 5 bis 9, **dadurch gekennzeichnet, dass** die Basis (2) ein Verbindungselement (27) umfasst, das mit dem zweiten Endbereich (25) zusammen wirkt und außerhalb der Kavität (8) angeordnet ist.

11. Spannvorrichtung gemäß einem der Ansprüche 5 bis 10, **dadurch gekennzeichnet, dass** der Schuh (3) einen tassenförmigen Körper (9) definiert, der die Feder (4) aufnimmt.

12. Spannvorrichtung gemäß einem der vorstehenden Ansprüche, **dadurch gekennzeichnet, dass** der Schuh (3) einen Arm (10) umfasst, der eine bogenförmige Fläche (6) bildet, die ausgelegt ist, um in Kontakt mit einem Riemen von einem Riemenantrieb zu gelangen, und dadurch, dass der Arm (10) eine Aufnahme (30) für ein Handwerkzeug bildet.

## Revendications

1. Tendeur destiné à un entraînement par courroie mouillée à l'huile, comprenant une base (2) conçue pour être fixée à une paroi d'un moteur à combustion interne, un sabot (3) articulé sur ladite base (2) autour d'un axe (A), et une ligne de fluide (31, 33, 39) destinée à fournir de l'huile, présentant un orifice (31) ménagé en amont dudit sabot (3) par rapport à la direction d'alimentation de la courroie sur ledit sabot (3),
**caractérisé en ce que** ladite ligne comprend une conduite (33) adaptée pour loger la tige d'un dispositif (V) en vue d'une fixation dudit tendeur sur la paroi dudit moteur à combustion interne.

2. Tendeur selon la revendication 1, **caractérisé en ce que** ladite conduite (33) est définie par un corps cylindrique (34) et **en ce que** ledit orifice (31) est partiellement défini par ledit corps cylindrique (34).

3. Tendeur selon la revendication 2, **caractérisé en ce que** ledit orifice (31) est également défini au moyen d'une partie dudit dispositif de fixation (F).

4. Tendeur selon l'une quelconque des revendications précédentes, **caractérisé par** le fait de comprendre un dispositif d'orientation angulaire (36) destiné à orienter ledit orifice (31) dans une position angulaire fixe.

5. Tendeur selon l'une quelconque des revendications précédentes, **caractérisé par** le fait de comprendre un ressort à torsion (4) présentant une première partie d'extrémité (26) reliée audit sabot (3) et une deuxième partie d'extrémité (25) fixe par rapport à ladite base (2) et logée dans une cavité (8) entourée d'une paroi fixe (12) par rapport audit sabot (3), où ladite paroi (12) définit une ouverture (16) traversée par ladite deuxième partie d'extrémité (25).

6. Tendeur selon la revendication 5, **caractérisé en ce qu'**une surface de friction est agencée entre ladite paroi (12) et ladite base (2), et **en ce que** ladite deuxième partie d'extrémité (25) est agencée sur le côté opposé de ladite base (2) par rapport à ladite surface de friction et chevauche ladite surface de friction dans la direction axiale.

7. Tendeur selon la revendication 6, **caractérisé par** le fait de comprendre au moins un élément de friction (17 ; 18) présentant une dent (19 ; 20) logée dans ladite ouverture (16) afin de définir une liaison rigide en rotation par rapport audit sabot (3).

8. Tendeur selon la revendication 7, **caractérisé par** le fait de comprendre un deuxième élément de friction (18 ; 17) agencé sur le côté opposé dudit au moins un élément de friction (17 ; 18) par rapport à ladite paroi (12) et présentant une deuxième dent (20 ; 19) logée dans ladite ouverture (16) afin de définir une liaison rigide en rotation par rapport audit sabot (3).

9. Tendeur selon l'une quelconque des revendications 5 à 8, **caractérisé en ce que** ladite cavité (8) est annulaire et est fermée aussi bien au niveau du sommet que du fond le long de la direction axiale.

10. Tendeur selon l'une quelconque des revendications 5 à 9, **caractérisé en ce que** ladite base (2) comprend un élément de liaison (27) coopérant avec ladite deuxième partie d'extrémité (25) et agencé à l'extérieur de ladite cavité (8).

11. Tendeur selon l'une quelconque des revendications 5 à 10, **caractérisé en ce que** ledit sabot (3) définit un corps en forme de coupelle (9) logeant le ressort (4).

12. Tendeur selon l'une quelconque des revendications précédentes, **caractérisé en ce que** ledit sabot (3) comprend un bras (10) définissant une surface incurvée (6) conçue pour venir en contact avec une courroie d'un entraînement par courroie, et **en ce que** ledit bras (10) définit un siège (30) destiné à un outil manuel.
